# EUROPÄISCHE PATENTANMELDUNG

(11) **EP 1 041 700 A2**
(43) Veröffentlichungstag der Anmeldung: **04.10.2000**
(21) Anmeldenummer: 00105269.5
(22) Anmeldetag: 14.03.2000
(51) Int. Cl.: H02K 7/08, H02K 5/173, H02K 7/075

(54) **Motorangetriebenes Aggregat**

(30) Priorität: 29.03.1999 DE 19914258
(71) Anmelder: Continental Teves AG & Co. oHG, 60488 Frankfurt (DE)
(72) Erfinder: Dinkel, Dieter, 65817 Eppstein/Ts. (DE); Hinz, Axel, 61267 Neu-Anspach (DE); Reinartz, Hans-Dieter, 60439 Frankfurt/M. (DE)
(74) Vertreter: Portwich, Peter

(57) **Zusammenfassung**

Die Erfindung betrifft ein motorangetriebenes Aggregat (1) mit einer Motoreinheit (2) und einer Arbeitsmaschine (3), wobei die Motoreinheit (2) eine Motorwelle (7) zum Antrieb wenigstens eines Arbeitselementes der Arbeitsmaschine (3) aufweist, und die Motorwelle (7) wenigstens an einem der Arbeitsmaschine zugewandten Ende über ein erstes Lager (19) gelagert ist. Um einen ruhigen Lauf des motorangetriebenen Aggregats (1) zu gewährleisten, ist das erste Lager (19) in Radialrichtung zur Motorwelle (7) kraftschlüssig festgelegt.

## Beschreibung

Die Erfindung betrifft ein motorangetriebenes Aggregat mit einer Motoreinheit und einer Arbeitsmaschine, wobei die Motoreinheit eine Motorwelle zum Antrieb wenigstens eines Arbeitselementes der Arbeitsmaschine aufweist, und die Motorwelle wenigstens an einem der Arbeitsmaschine zugewandten Ende über ein erstes Lager gelagert ist.

Derartige Aggregate sind grundsätzlich bekannt und dienen vielfältigen Verwendungszwecken. So ist beispielsweise ein Motor-Pumpenaggregat für eine hydraulische, schlupfgeregelte Bremsanlage bekannt, bei dem ein Elektromotor an ein Gehäuse einer Hochdruckpumpe angeflanscht ist. Die Motorwelle des Elektromotors ist an beiden Seiten ihres Rotors über jeweils ein erstes und ein zweites Lager gelagert und greift mit ihrem freien Ende in eine Vertiefung des Gehäuses der Hochdruckpumpe ein. Das erste als Festlager ausgebildete Lager befindet sich dabei in der Vertiefung des Gehäuses, im wesentlichen bündig mit der Gehäuseaußenfläche der Pumpe, während das zweite Lager im Topfboden des topfförmigen Gehäuses des Elektromotors angeordnet ist, abgewandt von der Flanschseite zwischen Elektromotor und Hochdruckpumpe. Die Motorwelle treibt einen Exzenter innerhalb der Hochdruckpumpe an, der seinerseits wenigstens einen Pumpenkolben betätigt.

Bei diesem Aggregat wird das erste Lager in der Aufnahmebohrung des Pumpengehäuses durch Anflanschen des topfförmigen Elektromotorgehäuses an das Pumpengehäuse in Axialrichtung zur Motorwelle verpreßt. Die Aufnahmebohrung des ersten Lagers erreicht allerdings trotz erhöhten Fertigungsaufwands nicht die für einen ruhigen Lauf der Motorwelle erforderliche Genauigkeit. Zwischen dem Außenring des ersten Lagers und der Aufnahmebohrung verbleibt ein zu großer Spalt, in dem das erste Lager im Betrieb durch die Pumpenkolben hin und her gedrückt wird. Dabei kommt es durch den unruhigen Lauf auch zu einer starken Geräuschentwicklung des Aggregats.

Der Erfindung liegt daher die Aufgabe zugrunde, ein motorangetriebenes Aggregat der eingangs genannten Art derart weiterzuentwickeln, daß ein insgesamt ruhigerer Lauf der Motorwelle gewährleistet ist.

Die Erfindung löst bei dem eingangs genannten motorangetriebenen Aggregat diese Aufgabe mit dem kennzeichnenden Teil des Anspruchs 1. Danach ist das erste Lager in Radialrichtung zur Motorwelle kraftschlüssig festgelegt. Vorteilhaft kann dieser Kraftschluß ohne erhöhten Bohraufwand verwirklicht werden. Der Kraftschluß wird beispielsweise durch Verstemmen, Einpressen oder dergleichen des ersten Lagers in einer entsprechenden Aufnahmebohrung erzielt.

Als besonders stabile Konstruktion ist das erste Lager bevorzugt im Gehäuseblock der Arbeitsmaschine festgelegt.

Für eine besonders stabile Festlegung der Motorwelle in dem als Festlager ausgebildeten ersten Lager ist die Motorwelle bevorzugt im ersten Lager kraftschlüssig festgelegt.

Eine solche kraftschlüssige Festlegung von Motorwelle und erstem Lager besteht bevorzugt darin, daß die Motorwelle als Hohlwelle ausgebildet und durch Aufspreizen im Bereich des ersten Lagers dort festgelegt ist.

Bevorzugt ist die Motorwelle innerhalb des ersten Lagers auf einen Abschnitt einer Exzentereinheit der Arbeitsmaschine aufgeschoben, um vorteilhaft eine besonders drehfeste Verbindung zwischen dem ersten Lager, der Motorwelle und der Exzentereinheit zu schaffen.

Dabei weist der Abschnitt gemäß einer ersten bevorzugten Befestigungsart dieser drei Bauteile eine konische Außenfläche, gemäß einer zweiten bevorzugten Befestigungsart eine Innenbohrung mit Innengewinde, bei welcher der Abschnitt durch Einschrauben eines geeigneten Mittels sich spreizt und/oder gemäß einer dritten bevorzugten Befestigungsart eine Innenbohrung für die kraftschlüssige Aufnahme einer Kugel auf.

Als Alternative zur radialen Verspannung der drei Bauteile ist bevorzugt der Innenring des ersten Lagers zwischen der Exzentereinheit der Arbeitsmaschine und dem aus der Motoreinheit freikommenden Ende der Motorwelle in Axialrichtung verspannt.

Bevorzugt ist für die leichte Montage von Motoreinheit und Arbeitsmaschine an einem der Arbeitsmaschine abgewandten Ende ein als Festlager ausgebildetes zweites Lager vorgesehen.

Bevorzugt ist das erste Lager kraftschlüssig in einem Blechschild festgelegt. Besonders bevorzugt weist die Motoreinheit ein Gehäuse mit einem das Blechschild bildenden Boden auf. Vorteilhaft ist bei dieser kraftschlüssigen Festlegung der Motorwelle ein sehr guter Schutz der Motoreinheit (z.B. des Elektromotors) gegen eine Leckage der Arbeitsmaschine (z.B. der Pumpe) und eine verringerte Geräuschentwicklung geschaffen.

Bevorzugt ist am Topfboden eine elektrische Anschlußfläche angebracht, welche als integrierter Adapter für den elektrischen Anschluß der als Elektromotor ausgebildeten Motoreinheit und als Träger für den Bürstenhalter des Elektromotors ausgebildet ist. Vorteilhaft kann diese Anschlußfläche, die nunmehr als Motorgrundplatte ausgestaltet ist, gegenüber der üblicherweise als gesamter Topfboden ausgebildeten Motorgrundplatte erheblich verkleinert werden.

Bevorzugt bildet für eine Bauteilereduktion das Blechschild die äußere Lagerhülse des ersten Lagers.

Als besonderes kostengünstige Ausführung ist das erste und/oder das zweite Lager als Nadellager ausgebildet. Bevorzugt ist die Motorwelle mit dem Innenring des ersten Lagers verklebt, wodurch vorteilhaft eine besonders einfache Festlegung des ersten Lagers mit der Motorwelle geschaffen ist.

Bevorzugt ist die Exzentereinheit der Arbeitsmaschine ausgewuchtet, um vorteilhaft die Geräuschentwicklung zu reduzieren.

Nachfolgend werden weitere Vorteile und Merkmale der Erfindung anhand bevorzugter Ausführungsbeispiele der Erfindung mit Bezug auf die beigefügte Zeichnung näher beschrieben. In der Zeichnung zeigen:
- Fig. 1: in Schnittansicht ein motorangetriebenes Aggregat gemäß einem ersten bevorzugten Ausführungsbeispiel der Erfindung;
- Fig. 2: in Schnittansicht einen in der Arbeitsmaschine des motorangetriebenen Aggregats vorgesehenen Pumpenexzenter;
- Fig. 3 bis 5: in Schnittansicht drei verschiedene bevorzugte Befestigungsarten der Motorwelle an dem in Fig. 2 dargestellten Pumpenexzenter;
- Fig. 6: eine zur Fig. 1 alternative kraftschlüssige Festlegung des ersten Lagers gemäß einem zweiten bevorzugten Ausführungsbeispiel der Erfindung;
- Fig. 7: eine zur Figur 6 alternative elektrische Steckverbindung für den elektrischen Anschluß der Motoreinheit;
- Fig. 8: eine zu den Figuren 1 und 6 alternative kraftschlüssige Festlegung des ersten Lagers gemäß einem dritten bevorzugten Ausführungsbeispiel der Erfindung; und
- Fig. 9: eine vereinfachte explosionsartige Darstellung des motorangetriebenen Aggregats zum Erläutern der einzelnen Montageschritte bei dessen Fertigen.

Die in der nachfolgenden Beschreibung verwendeten Begriffe "oben", "unten", "obere" und "untere", etc. sind nicht einschränkend zu verstehen, sondern dienen lediglich einer einfacheren Lesbarkeit der Figurenbeschreibung.

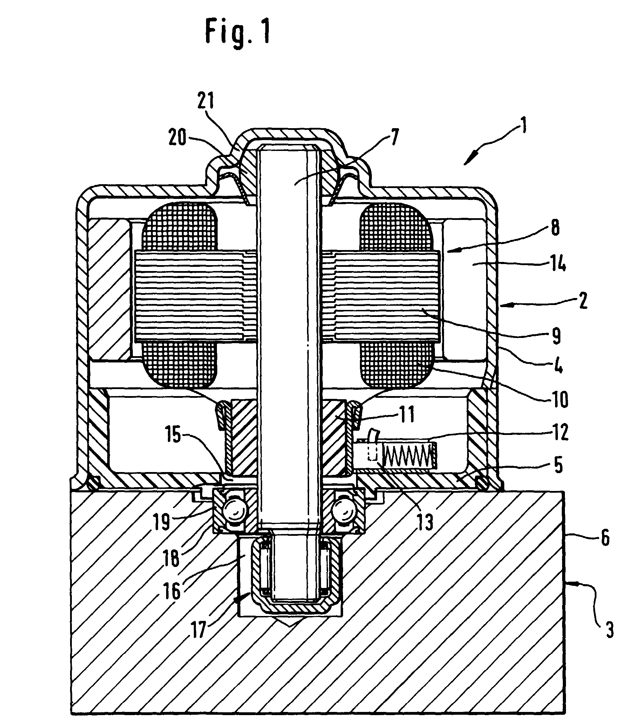

Fig. 1 zeigt eine Schnittansicht eines motorangetriebenen Aggregats 1 gemäß einem ersten Ausführungsbeispiel der Erfindung. Das Aggregat 1 umfaßt eine Motoreinheit 2, die in diesem Ausführungsbeispiel als Elektromotor ausgebildet ist, und eine Arbeitsmaschine 3, die in diesem Ausführungsbeispiel als Pumpe ausgebildet ist. Der Elektromotor 2 weist ein an mindestens einer Seite offenes topfförmige Motorgehäuse 4 mit einem der Pumpe zugewandten Boden 5 auf, während die Pumpe 3 ein Pumpengehäuse 6 mit mehreren nicht dargestellten Bohrungen aufweist, in denen u.a. nicht dargestellte Pumpenkolben verschieblich angeordnet sind. In dem Pumpengehäuse 6 können ferner nicht dargestellte Ventile vorgesehen sein, mit deren Hilfe eine Steuerung der durch die Pumpe 3 hervorgerufenen Druckmittelströme bewirkt werden.

Innerhalb des Motorengehäuses 4 befindet sich eine Motorwelle 7 mit einem Rotor 8, der einen Anker 9 sowie Wicklungen 10 aufweist. An der Motorwelle 7 ist in Nähe des Bodens 5 ein Kommutator 11 zur Stromversorgung der Wicklungen 10 drehfest angebracht. An dem Boden 5 ist ferner ein Bürstenhalter 12 angebracht, der federnd in elektrischer Verbindung mit dem Kommutator 11 stehende Bürsten 13 in Köchern führt. Im Motorgehäuse 4 sind ferner noch in Höhe des Rotors 8 Permanentmagnete 14 vorgesehen, deren Permanentmagnetfelder in Wechselwirkung mit den durch die Wicklungen 10 erzeugten Magnetfelder den Motor 2 antreiben.

Der das offene Ende des topfförmigen Motorgehäuses verschließende Boden 5 weist eine zentrale Durchgangsbohrung 15 auf, durch welche ein Ende der Motorwelle 7 in eine sacklochartige Vertiefung 16 des Pumpengehäuses 6 ragt. Quer in die Vertiefung 16 ragen die nicht dargestellten Pumpenkolben, die von einem drehfest mit der Motorwelle 7 verbundenen Pumpenexzenter 17 beaufschlagt werden.

Eingangsseitig der Vertiefung 16 des Pumpengehäuses 6 ist eine Aufnahme 18 vorgesehen, die ein erstes Lager 19 zur Lagerung des der Pumpe 3 zugewandten Endes der Motorwelle 7 aufnimmt. Der Durchmesser dieser Aufnahme 18 ist größer als der Durchmesser der übrigen Vertiefung 16, in welcher der Pumpenexzenter 17 aufgenommen ist. Das Lager 19 ist in der Aufnahme 18 verstemmt, eingepreßt oder auf andere Weise derart festgelegt, daß es radial zur Motorwelle 7 kraftschlüssig festgelegt ist. Die Motorwelle 7 ist an ihrem pumpenabgewandten Ende in einem zweiten Lager 20 auf genommen, das in eine im Motorgehäuse 4 entsprechend geformte Aufnahme 21 eingepreßt ist.

In einem nicht weiter ausgeführten Ausführungsbeispiel der Erfindung kann das zweite Lager 20 als Festlager ausgebildet sein. Dabei ist das zweite Lager 20 beispielsweise als Kugellager ausgebildet, was den Wirkungsgrad verbessert und das Motorgehäuse 4 im Bereich der Aufnahme 21 des zweiten Lagers 20 verkürzen läßt. Die Anmelderin behält sich vor, diesen Gegenstand eines als Festlager ausgebildeten zweiten Lagers 20 in einem motorangetriebenen Aggregat 1 auch ohne die kraftschlüssige Festlegung des ersten Lagers 19 eigenständig weiterzuverfolgen.

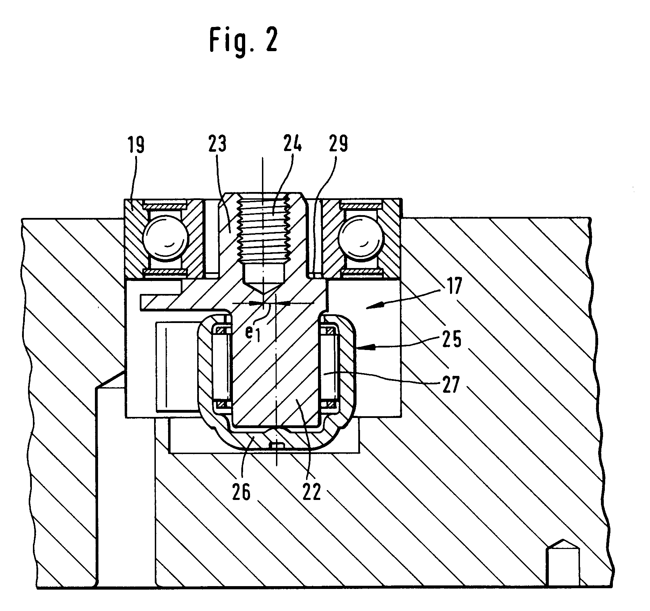

Fig. 2 zeigt ein bevorzugtes Ausführungsbeispiel des Pumpenexzenters 17. Hiernach weist der Pumpenexzenter 17 zwei in Längsrichtung versetzte Abschnitte 22 und 23 auf. Der untere Abschnitt 22 hat eine rotationszylindrische Außenform, die zu der Vertiefung 16 um die Exzentrizität e₁ versetzt angeordnet ist. Die Unterseite des unteren Abschnittes 22 gelangt bis in Bodennähe der Vertiefung 16. An den unteren Abschnitt 22 schließt sich einstückig der den Verbindungsanschluß zur Motorwelle 7 bildende obere Abschnitt 23 an, der ebenfalls eine rotationszylindrische Außenform sowie ein Innenbohrung 24 aufweist. Die im oberen Abschnitt 14 vorgesehene Innenbohrung 24 fluchtet bei Montage der Motorwelle 7 mit der Mittelachse der Motorwelle 7 und ist somit zu der Mittelachse des unteren Abschnittes 22 um die Exzentrizität e₁ versetzt angeordnet.

Der untere Abschnitt 22 wird fast in seiner gesamten Länge von einem Wälzlager 25 mit einem Außenring 26 umgriffen. Das Wälzlager 25 weist dabei eine gekapselte Nadelreihe 27 als Wälzkörper auf. Der Außenring 26 betätigt mit seiner Umfangsfläche die in die Vertiefung 16 radial hinein ragenden Enden nicht dargestellter Pumpenkolben. Der Pumpenexzenter 17 weist außerdem einen Unwuchtausgleich auf.

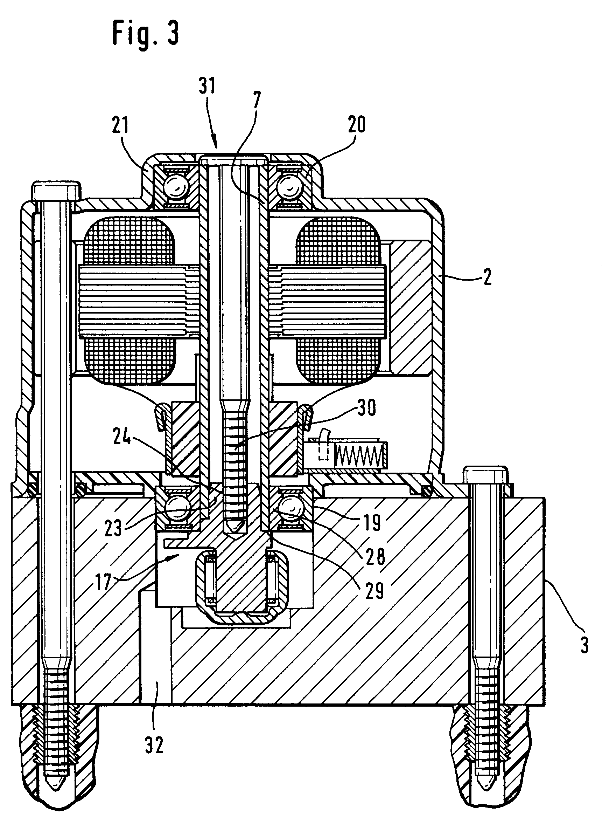

Figuren 3 bis 5 zeigen bevorzugte Befestigungsarten der Motorwelle 7 an einem Innenring 28 des ersten Lagers 19, damit das erste Lager 19 als Festlager dienen kann. Grundsätzlich sind die Motorwelle 7 und der Innenring 28 des ersten Lagers 19 bereits sehr präzise gefertigte Bauteile, so daß das Spiel zwischen diesen beiden Bauteilen äußerst gering ist. Die radiale Bewegungsfreiheit der Motorwelle 7 ergibt sich somit durch den Außendurchmesser der Motorwelle 7 und den Innendurchmesser des Innenrings 28. So genügt bereits eine klebende Verbindung (ggf. mittels einer bekannten Klebetechnik zum Kleben von Stahl auf Stahl) zwischen Motorwelle 7 und Innenring 28, um die Motorwelle 7 am ersten Lager 19 festzulegen. Zwecks einfacherer Montage (zum Vermeiden des Auftragens eines Klebers während der Fertigung) kann die Motorwelle 7 an geeigneter Stelle mit einem gekapselten Kleber vorbeschichtet sein.

Dabei übernimmt das erste Lager 19 wieder die Festlagerfunktion. Werden sowohl das erste 19 als auch das zweite Lager 20 als Festlager ausgebildet, so ergibt sich eine für das Geräuschverhalten günstige Verspannung der beiden Lager 19 und 20 zueinander.

Fig. 3 zeigt eine erste Befestigungsart der Motorwelle 7 am Innenring 28. Die Motorwelle 7 ist hierbei als Hohlwelle ausgebildet. Bei der Montage wird die Hohlwelle durch den Innenring 28 des ersten Lagers 19 und vollständig über den oberen Abschnitt 23 des Pumpenexzenters 17 geschoben, bis sie an einem am oberen Abschnitt 23 vorgesehenen Anschlag 29 anstößt. Anschließend wird die Motorwelle 7 in Höhe des Innenrings 28 durch ein geeignetes Verfahren bzw. Mittel auf gespreizt. Hierzu wird der obere Abschnitt 23 aufgespreizt, dessen Außendurchmesser gleich dem Innendurchmesser der Motorwelle 7 entspricht. Mit dem Aufweiten des oberen Abschnittes 23 wird also auch die Motorwelle 7 aufgeweitet und es kommt zu einem Kraftschluß zwischen oberem Abschnitt 23, Motorwelle 7 und Innenring 28. Der obere Abschnitt 23 des Pumpenexzenters 17 hat eine Höhe, welche im wesentlichen der Höhe des Innenrings 28 entspricht. Damit wird gewährleistet, daß bei aufgeweitetem oberen Abschnitt 23 der in Radialrichtung zur Motorwelle 7 auf den Innenring 28 wirkende Kraftschluß über die gesamte Innenfläche des Innenrings 28 wirkt.

Das erste Lager 19 kann auch derart im Pumpengehäuse angeordnet sein, daß die Motorwelle 7 noch nach unten aus dem ersten Lager 19 herausragt und an zum ersten Lager 19 beabstandeter Stelle am Pumpenexzenter 17 drehfest befestigt ist. Dann wird die Motorwelle 7 in Höhe des ersten Lagers 19 über ein anderes geeignetes Mittel aufgeweitet, um den Kraftschluß mit dem Innenring 28 zu erzielen. Beispielsweise kann ein konischer Abschnitt innerhalb der Motorwelle 7 in Höhe des ersten Lagers 19 vorgesehen sein, in den ein entsprechendes Gegenstück zum Aufweiten der Motorwelle 7 eingedrückt werden kann.

Bei der Befestigungsart gemäß der Fig. 3 ist die Innenbohrung 24 des oberen Abschnitts 23 mit einer Gewindekontur versehen, die bei Einschrauben einer geeigneten Schraube 30 zu einer bleibenden Ausweitung des als Mutter dienenden oberen Abschnitts 23 führt. Durch diese Ausweitung wird der obere Abschnitt 23 in Radialrichtung zur Motorwelle 7 kraftschlüssig in der Motorwelle 7 und die Motorwelle 7 kraftschlüssig in dem Innenring 28 festgelegt. Die Schraube 30 kann nach der Aufweitung ggf. wieder entfernt werden.

Für das Einschrauben der Schraube 30 in die Innenbohrung 24 ist zentral in der Aufnahme 21 für das zweite Lager 20 eine Montageöffnung 31 im Motorgehäuse 4 vorgesehen. Durch diese Montageöffnung 31 kann ein geeignetes Schraubgerät durch die Motorwelle 7 eingeführt werden, so daß die Schraube 30 bei niedergehaltener Motorwelle 7 in die Innenbohrung 24 eingeschraubt werden kann. Der Öffnungsdurchmesser der Montageöffnung 31 ist so bemessen, daß während des Einschraubens von außerhalb des Motorgehäuses 4 noch ein weiteres Werkzeug zum Niederhalten der Motorwelle 7 auf die Stirnfläche der Hohlwelle angesetzt werden kann.

Anstelle oder zusätzlich zu dem Innengewinde in der Innenbohrung 24, kann die rotationszylindrische Außenfläche des oberen Abschnitts 23 auch derart konisch ausgebildet sein, daß die hohle Motorwelle 7 bei Aufziehen auf den oberen Abschnitt 23 auf geweitet wird. Hierzu wird ebenfalls durch die Montageöffnung 31 eine Schraube 30 so in die Innenbohrung 24 eingeschraubt, daß die Motorwelle 7 über den oberen Abschnitt 23 gezogen wird. Es kann beispielsweise eine nicht dargestellte Unterlegscheibe, deren Außendurchmesser gleich dem Außendurchmesser der Motorwelle 7 entspricht, auf die obere Stirnseite gelegt und eine durch die Unterlegscheibe ragende Schraube 30 entsprechender Länge in die Innenbohrung 24 eingeschraubt werden.

Von unten kann durch einen im Pumpengehäuse 6 vorgesehenen Ablaufkanal 32 ein nicht dargestellter Stift zur Abstützung des Montagedrehmomentes so in die Vertiefung 16 eingeschoben werden, daß der Pumpenexzenter 17 beim Einschrauben der jeweiligen Schraube 30 am Drehen gehindert wird. Nach Fixierung der Motorwelle 7 am Innenring 28 kann die Montageöffnung 31 durch eine nicht dargestellte Abdeckung zum Abdichten des Motorgehäuses 4 verschlossen werden. Als Alternative kann auch lediglich die Öffnung in der Stirnseite der hohlen Motorwelle 7 durch eine geeignete Abdeckung abgedichtet werden.

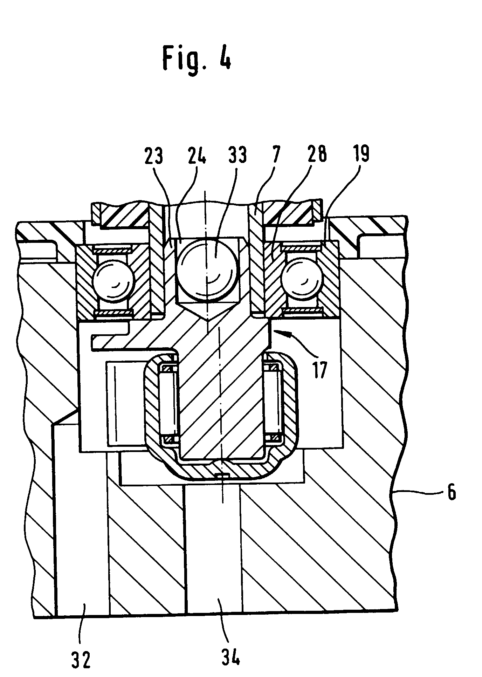

Fig. 4 zeigt eine dritte Befestigungsart der Motorwelle 7 am Innenring 28. In die Innenbohrung 24 des Pumpenexzenters 17 wird eine Kugel 33 oder ein nicht dargestelltes leicht konisch ausgebildetes Exzenterstück derart eingedrückt, daß der obere Abschnitt 23 des Pumpenexzenters 17 aufgeweitet wird. Die Kugel 33 ist dabei so bemessen, daß ihr Außendurchmesser etwas größer als der Innendurchmesser der Innenbohrung 24 ist. Hierdurch wird wiederum der gewünschte Kraftschluß zwischen oberem Abschnitt 23, unterem Ende der Motorwelle 7 und Innenring 28 des ersten Lagers 19 erzielt. Damit beim Eindrücken der Kugel 33 oder des Exzenterstückes der Pumpenexzenter 17 nicht nach unten aus der Motorwelle 7 gedrückt wird, ist eine weitere Montageöffnung 34 im Pumpengehäuse 6 ausgebildet, die im wesentlichen mit der Mittelachse des oberen Abschnitts 23 des Pumpenexzenters 17 fluchtet. Durch diese Montageöffnung 34 kann von unten ein Abstützstift zum Gegenhalten gegen den Pumpenexzenter 17 eingeführt werden.

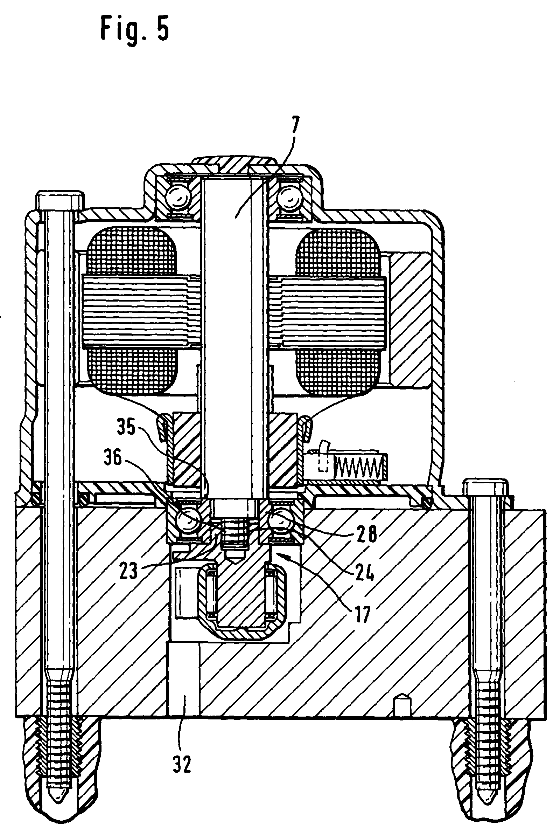

Fig. 5 zeigt eine dritte Befestigungsart von Innenring 28, Motorwelle 7 und Pumpenexzenter 17 gemäß einem dritten Ausführungsbeispiel. Dabei kann die Motorwelle 7 als Hohlwelle mit einem größeren Außendurchmesser als der Innendurchmesser des Innenrings 28 ausgebildet sein, wobei am unteren Ende der Motorwelle 17 ein Ansatz 35 mit einem Außendurchmesser gleich dem Innendurchmesser des Innenrings 28 vorgesehen ist. Dieser Ansatz 35 kann einstückig mit der Motorwelle 7 ausgebildet sein. Der obere Abschnitt 23 des Pumpenexzenters 17 hat nunmehr eine geringere Höhe als die Höhe des Innenrings 28, so daß er bei aufgeschobener Motorwelle 7 lediglich teilweise von unten in den Innenring 28 eintaucht.

Bei der Montage wird die Motorwelle 7 so in den Innenring 28 geschoben, daß der zwischen Ansatz 35 und unterem Ende der Motorwelle 7 ausgebildete Anschlag oben an dem Innenring 28 anschlägt. Anschließend wird eine in der Fig. 5 nicht dargestellte Schraube von oben durch die hohle Motorwelle 7 in die mit einem Innengewinde versehene Innenbohrung 24 eingeschraubt. Der Schraubenkopf kann sich dabei entweder innen in der Motorwelle 7 in Höhe des Anschlags zum Ansatz 35 abstützen oder auch oben am oberen Ende der Motorwelle 7. Durch das Einschrauben wird der Innenring 28 in Axialrichtung der Motorwelle 7 zwischen dem Pumpenexzenter 17 und der Motorwelle 7 kraftschlüssig verspannt, wodurch diese Bauteile somit spielfrei gemacht werden. Beim Einschrauben kann wiederum ein Stift von unten durch den Ablaufkanal 32 eingeführt werden, um eine Drehung des Pumpenexzenters 17 zu sperren.

Gemäß einer anderen Alternative kann die Motorwelle 7 auch massiv ausgebildet sein, wobei an ihrem unteren Ansatz 35 zentral ein weiterer mit einem Außengewinde versehener Schraubenfortsatz 36 einstückig verbunden ist. Die Motorwelle 7 wird bei der Montage hierbei direkt an ihrem oberen Ende gedreht, wodurch der Schraubenfortsatz 36 in die mit einem entsprechenden Innengewinde versehene Innenbohrung 24 eingeschraubt wird und dabei die axiale Verspannung zwischen Motorwelle 7, Innenring 28 und Pumpenexzenter 17 herbeiführt.

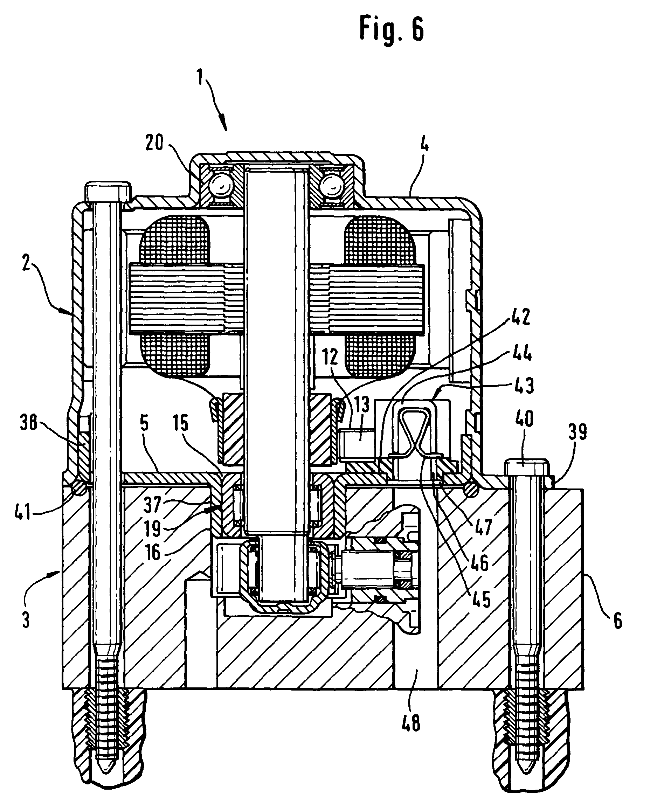

Fig. 6 zeigt eine zur Fig. 1 alternative kraftschlüssige Festlegung des ersten Lagers 19 gemäß einem zweiten bevorzugten Ausführungsbeispiel der Erfindung. Das erste Lager 19 ist dabei in dem als Blechschild ausgebildeten Boden 5 des Motorgehäuses 4 eingepreßt. Hierzu weist der Boden 5 um seine Durchgangsöffnung 15 eine axial nach unten in die Vertiefung 16 ragende zylinderförmige Auskragung 37 auf, die einstückig mit dem Boden 5 verbunden ist. Der Außendurchmesser der Auskragung 37 entspricht dabei dem eingangsseitigen Innendurchmesser der Vertiefung 16, so daß einerseits ein Art Montagehilfe beim Zusammenbau von Elektromotor 2 und Pumpe 3 und andererseits ein Stabilisierung der Auskragung 37 in Radialrichtung geschaffen ist. Die Höhe der Auskragung 37 entspricht im wesentlichen der Höhe des ersten Lagers 19. Dies kann als kostengünstiges Nadellager ausgebildet sein. Dabei ist das zweite Lager 20 als Festlager ausgebildet.

Der Boden 5 weist an seinem Umfang eine axial nach oben umgebördelte Schürze 38 auf, die zum Verschließen des Motorgehäuses 4 von unten in das topfförmige Motorgehäuse 4 kraftschlüssig eingepreßt wird. Das Motorgehäuse 4 weist seinerseits eine in seinem Öffnungsbereich radial nach außen umgebördelte Schürze 39 auf. Die Schürze 39 des Motorgehäuses 4 ist mittels entsprechender Schrauben 40 an das Pumpengehäuse 6 geschraubt. An der Nahtstelle zwischen der Schürze 38 des Bodens 5 und dem Motorgehäuse 4 ist aufgrund der beiden Umbördelungen eine ringförmige Rille entstanden, in die bei in das Motorgehäuse 4 eingepreßtem Boden 5 eine Ringdichtung 41 gelegt werden kann. Diese Ringdichtung 41 dichtet die Vertiefung 16 und damit das Innere der Pumpe 3 nach außen ab. Diese Abdichtfunktion hat in den vorigen Ausführungsbeispielen das in das Pumpengehäuse 6 eingepreßte erste Lager 19 übernommen.

Auf dem in Fig. 6 dargestellten Boden 5 ist eine Anschlußfläche 42 angebracht, welche den Bürstenhalter 12 samt Bürsten 13 sowie einen Anschlußstecker 43 trägt. Der Anschlußstecker 43 ist auf der Anschlußfläche elektrisch mit den Bürsten 13 verbunden und kann als einfache Steckverbindung ausgebildet sein. Hierzu ist weist der Anschlußstecker 43 eine Steckerbuchse 44 mit darin vorgesehener Steckverbindungsfeder 45 auf, in der ein entsprechend geformter nicht dargestellter Stecker federnd aufgenommen werden kann. Dabei ist in der Anschlußfläche 42 eine Durchgangsöffnung 46, in dem Boden 5 eine der Durchgangsöffnung 46 gegenüberliegende Durchgangsöffnung 47, und eine sich durch das Pumpengehäuse 6 erstreckende und nach unten aus dem Pumpengehäuse 6 freikommende Durchgangsöffnung 48 ausgebildet, wobei letztere Durchgangsöffnung 48 der Durchgangsöffnung 47 gegenüberliegt. Der Anschlußstecker 43 öffnet sich dabei axial nach unten durch die drei miteinander fluchtenden Durchgangsöffnungen 46, 47 und 48. Der nicht dargestellte Stecker kann somit bei fertig montiertem Aggregat 1 von unten durch das Pumpengehäuse 6 mit dem Elektromotor 2 elektrisch verbunden werden.

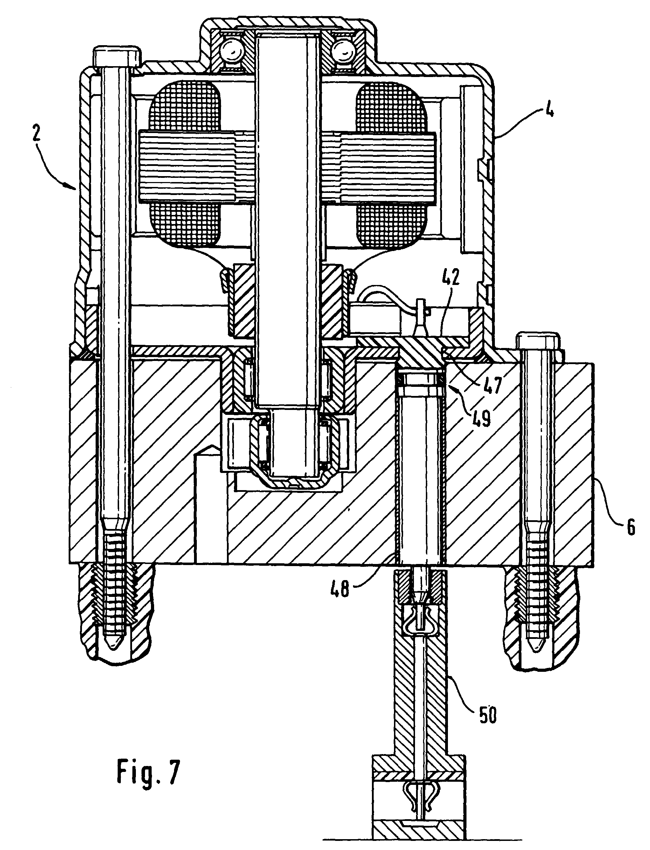

Dabei kann der Anschlußstecker 43 innen im Motorgehäuse 4 vorgesehen sein, es kann aber statt dessen, wie in Fig. 7 dargestellt, ein nach außen durch die Durchgangsöffnung 47 des Bodens 5 ragender Adapter 49 (z.B. ein einfacher Stecker) an der Anschlußfläche 42 vorgesehen sein (einstückig mit der Anschlußfläche 42 verbunden, die somit an ihren Kontaktflächen zum Motorgehäuse 4 elektrisch isoliert sein muß, oder aber elektrisch gegenüber der Anschlußfläche 42 isoliert und zu dieser als separates Bauteil ausgebildet). Im letzteren Fall wird eine entsprechende Steckerbuchse 50 von unten durch das Durchgangsloch 48 des Pumpengehäuses 6 auf den Adapter 49 geschoben. In beiden Fällen kann somit ein elektrischer Anschluß zu einer elektronischen Steuereinheit des Elektromotors 2 hergestellt werden. Der Adapter 43 bzw. 49 kann separat oder zu einer nicht dargestellten Elektronikbox gehörig sein.

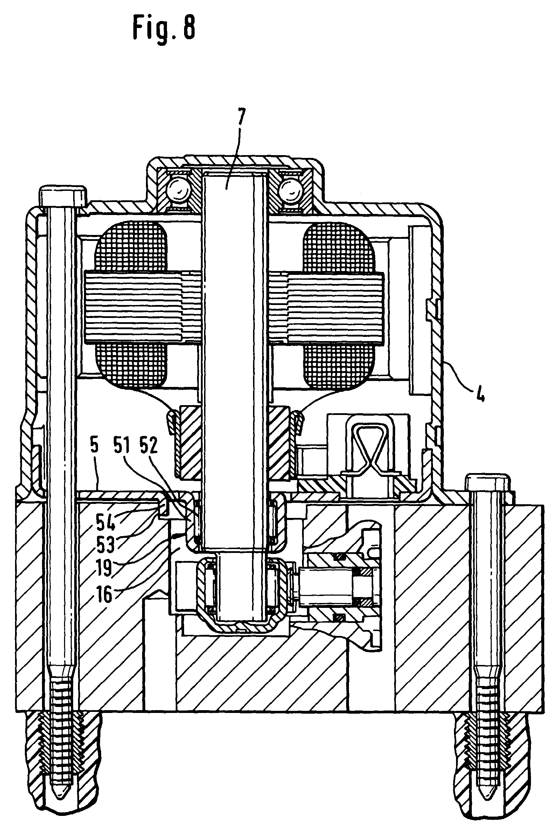

Fig. 8 zeigt eine zu den Figuren 1 und 6 alternative kraftschlüssige Festlegung des ersten Lagers 19 gemäß einem dritten bevorzugten Ausführungsbeispiel der Erfindung. Hierbei bildet der als Blechschild ausgebildete Boden 5 des Motorgehäuses 4 bereits die äußere Lagerhülse 51 des als Nadellager ausgebildeten ersten Lagers 19. Der in Radialrichtung wirkende Kraftschluß des ersten Lagers 19 wird durch Einpressen der Nadeln 52 und der Motorwelle 7 in die Lagerhülse 51 erzielt. Vorteilhaft wird bei diesem Ausführungsbeispiel ein Bauteil eingespart.

Als Zentrierhilfe bei der Montage des Elektromotors 2 auf das Pumpengehäuse ist im Boden 5 wenigstens eine axial nach unten in eine Ausnehmung 53 ragende Ausstanzung 54 vorgesehen. Die Ausnehmung 53 ist am Eingang der Vertiefung 16 angeordnet und weist einen größeren Durchmesser als die Vertiefung 16 auf.

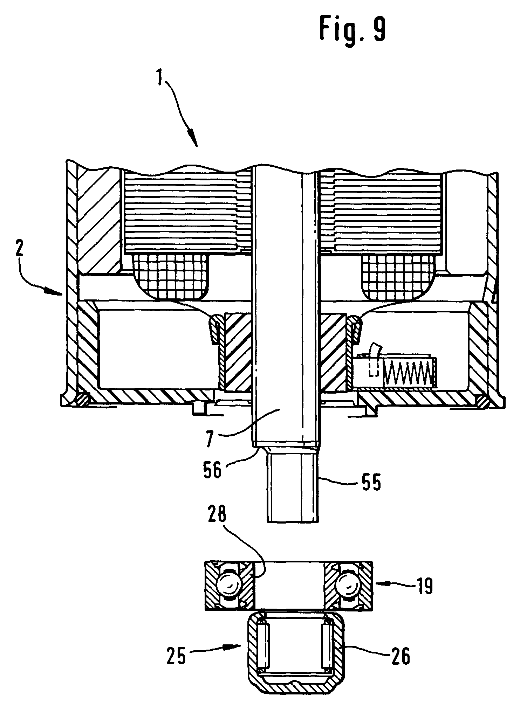

Fig. 9 ist eine vereinfachte explosionsartige Darstellung zum Erläutern der einzelnen Montageschritte beim Fertigen des Aggregats 1 gemäß einem Ausführungsbeispiel mit einem als Loslager ausgebildeten ersten Lager 19 oder einem mit der Motorwelle verklebtem ersten Lager 19. In einem ersten Schritt wird das Wälzlager 25 des Pumpenexzenter 17 ggf. zusammen mit einem nicht dargestellten Kuppelring in die Vertiefung 16 gesteckt und dort montiert. In einem zweiten Schritt wird das erste Lager 19 im Pumpengehäuse 6 kraftschlüssig festgelegt, indem es dort verstemmt, eingepresst oder sonstwie kraftschlüssig festgelegt wird. In einem dritten Schritt wird der mit bereits fertig montierter Motorwelle 7 versehene Elektromotor 2 auf das Pumpengehäuse 6 montiert (z.B. durch Verschrauben). Dabei wird die Motorwelle 7 durch den Innenring 28 geschoben. Die Motorwelle 7 kann mit einem Kleber beschichtet sein, so daß die Motorwelle 7 nach Aushärten des Klebers in dem Innenring 28 des ersten Lagers 19 festgelegt ist. Das erste Lager 19 arbeitet dann als Festlager, wobei das zweite Lager 20 sowohl als Los- als auch als Festlager ausgebildet sein kann. Die Motorwelle 7 weist an ihrem unteren Ende bereits einstückig einen zusammen mit dem Wälzlager 25 als Pumpenexzenter 17 wirkenden radial versetzten Ansatz 55 auf. Dieser Ansatz 55 wird durch den Innenring 28 und das Wälzlager 25 so weit geschoben, bis ein Anschlag 56 an der Gehäuseoberseite des Außenrings 26 des Wälzlagers 25 anschlägt.

### Bezugszeichenliste:

- 1: Aggregat
- 2: Elektromotor
- 3: Pumpe
- 4: Motorgehäuse
- 5: Boden
- 6: Pumpengehäuse
- 7: Motorwelle
- 8: Rotor
- 10: Wicklungen
- 11: Kommutator
- 12: Bürstenhalter
- 13: Bürsten
- 14: Permanentmagnete
- 15: Durchgangsbohrung
- 16: Vertiefung
- 17: Pumpenexzenter
- 18: Aufnahme
- 19: erstes Lager
- 20: zweites Lager
- 21: Aufnahme
- 22: unterer Abschnitt
- 23: oberer Abschnitt
- 24: Innenbohrung
- 25: Wälzlager
- 26: Außenring
- 27: Nadelreihe
- 28: Innenring
- 29: Anschlag
- 30: Schraube
- 31: Montageöffnung
- 32: Ablaufkanal
- 33: Kugel
- 34: Montageöffnung
- 35: Ansatz
- 36: Schraubenfortsatz
- 37: Auskragung
- 38: Schürze
- 39: Schürze
- 40: Schrauben
- 41: Ringdichtung
- 42: Anschlußfläche
- 43: Anschlußstecker
- 44: Steckerbuchse
- 45: Steckverbindungsfeder
- 46: Durchgangsöffnung
- 47: Durchgangsöffnung
- 48: Durchgangsöffnung
- 49: Adapter
- 50: Steckerbuchse
- 51: äußere Lagerhülse
- 52: Nadeln
- 53: Ausnehmung
- 54: Ausstanzung
- 55: Ansatz
- 56: Anschlag
- e₁: Exzentrizität des Exzentermittels

## Patentansprüche

1. Motorangetriebenes Aggregat (1) mit einer Motoreinheit (2) und einer Arbeitsmaschine (3), wobei die Motoreinheit (2) eine Motorwelle (7) zum Antrieb wenigstens eines Arbeitselementes der Arbeitsmaschine (3) aufweist, und die Motorwelle (7) wenigstens an einem der Arbeitsmaschine (3) zugewandten ersten Lager (19) gelagert ist, **dadurch gekennzeichnet**, daß das erste Lager (19) in Radialrichtung zur Motorwelle (7) kraftschlüssig festgelegt ist.

2. Aggregat nach Anspruch 1, **dadurch gekennzeichnet**, daß das erste Lager (19) im Gehäuseblock (6) der Arbeitsmaschine (3) festgelegt ist.

3. Aggregat nach Anspruch 1 oder 2, **dadurch gekennzeichnet**, daß das erste Lager (19) als Festlager ausgebildet ist.

4. Aggregat nach Anspruch 3, **dadurch gekennzeichnet**, daß die Motorwelle (7) mit dem ersten Lager (19) kraftschlüssig verbunden ist.

5. Aggregat nach Anspruch 4, **dadurch gekennzeichnet**, daß die Motorwelle (7) als Hohlwelle ausgebildet und durch Aufspreizen im Bereich des ersten Lagers (19) dort festgelegt ist.

6. Aggregat nach Anspruch 4 oder 5, **dadurch gekennzeichnet**, daß die Motorwelle (7) innerhalb des ersten Lagers (19) auf einen Abschnitt (23) einer Exzentereinheit (17) der Arbeitsmaschine (3) aufgeschoben ist.

7. Aggregat nach Anspruch 6, **dadurch gekennzeichnet**, daß der Abschnitt (23) eine konische Außenfläche aufweist.

8. Aggregat nach Anspruch 6 oder 7, **dadurch gekennzeichnet**, daß der Abschnitt (23) eine Innenbohrung (24) mit Innengewinde derart aufweist, daß der Abschnitt (23) durch Einschrauben eines geeigneten Mittels sich spreizt.

9. Aggregat nach einem der Ansprüche 6 bis 8, **dadurch gekennzeichnet**, daß der Abschnitt (23) eine Innenbohrung (24) für die kraftschlüssige Aufnahme einer Kugel (33) aufweist.

10. Aggregat nach einem der Ansprüche 1 bis 4 und 6, **dadurch gekennzeichnet**, daß ein Innenring (28) des ersten Lagers (19) zwischen der Exzentereinheit (17) der Arbeitsmaschine (3) und dem aus der Motoreinheit (3) freikommenden Ende der Motorwelle (7) in Axialrichtung verspannt ist.

11. Aggregat nach einem der vorhergehenden Ansprüche, **dadurch gekennzeichnet**, daß an einem der Arbeitsmaschine (3) abgewandten Ende ein als Festlager ausgebildetes zweites Lager (20) vorgesehen ist.

12. Aggregat nach einem der Ansprüche 1 und 3 bis 11, **dadurch gekennzeichnet**, daß das erste Lager (19) kraftschlüssig in einem Blechschild festgelegt ist.

13. Aggregat nach Anspruch 12, **dadurch gekennzeichnet**, daß die Motoreinheit (2) ein Gehäuse (4) mit einem das Blechschild ausbildenden Boden (5) aufweist.

14. Aggregat nach Anspruch 13, **dadurch gekennzeichnet**, daß am Boden (5) eine elektrische Anschlußfläche (42) angebracht ist, welche als integrierter Adapter (43) für den elektrischen Anschluß der als Elektromotor ausgebildeten Motoreinheit (2) und als Träger für den Bürstenhalter (12) des Elektromotors ausgebildet ist.

15. Aggregat nach einem der Ansprüche 12 bis 14, **dadurch gekennzeichnet**, daß das Blechschild die äußere Lagerhülse (51) des ersten Lagers (19) bildet.

16. Aggregat nach einem der vorhergehenden Ansprüche, **dadurch gekennzeichnet**, daß das erste (19) und/oder das zweite Lager (20) als Nadellager ausgebildet ist.

17. Aggregat nach einem der Ansprüche 11 bis 16, **dadurch gekennzeichnet**, daß das zweite Lager (20) als Festlager ausgebildet ist.

18. Aggregat nach einem der vorgehenden Ansprüche, **dadurch gekennzeichnet**, daß die Motorwelle (7) mit dem Innenring (28) des ersten Lagers (19) verklebt ist.

19. Aggregat nach einem der Ansprüche 6 bis 18, **dadurch gekennzeichnet**, daß die Exzentereinheit (17) der Arbeitsmaschine (3) ausgewuchtet ist.

20. Aggregat nach einem der Ansprüche 12 bis 19, **dadurch gekennzeichnet**, daß zwischen Motoreinheit (2) und Arbeitsmaschine (3) im Bereich der Verbindung zwischen Blechschild und Motorgehäuse eine Dichtung (41) vorgesehen ist.
